# EUROPÄISCHE PATENTSCHRIFT

(11) **EP 3 372 538 B1**
(45) Veröffentlichungstag und Bekanntmachung des Hinweises auf die Patenterteilung: **23.02.2022**
(21) Anmeldenummer: 18155773.7
(22) Anmeldetag: 08.02.2018
(51) Int. Cl.: B65B 21/24, B65G 21/20, B65G 47/84, B65G 47/08, B65B 21/04, B65B 35/44, B65B 53/02, B65B 59/00

(54) **TRANSPORTABSCHNITT, VERFAHREN ZUM EINSTELLEN UND/ODER VERSTELLEN MINDESTENS EINER TRANSPORTBAHN INNERHALB EINES TRANSPORTABSCHNITTS UND VERPACKUNGSANLAGE**
TRANSPORT SECTION, METHOD FOR ADJUSTING AND/OR CONFIGURING AT LEAST ONE TRANSPORT LINE WITHIN A TRANSPORT SECTION AND PACKAGING PLANT
SECTION DE TRANSPORT, PROCÉDÉ DE RÉGLAGE ET/OU DE POSITIONNEMENT D'AU MOINS UNE BANDE TRANSPORTEUSE À L'INTÉRIEUR D'UNE SECTION DE TRANSPORT ET INSTALLATION D'EMBALLAGE

(30) Priorität: 06.03.2017 DE 102017203600
(43) Veröffentlichungstag der Anmeldung: 12.09.2018
(73) Patentinhaber: Krones Aktiengesellschaft, 93073 Neutraubling (DE)
(72) Erfinder: SPINDLER, Herbert, 93073 Neutraubling (DE); WERNER, Jürgen, 93073 Neutraubling (DE); WITTMANN, Stephan, 93073 Neutraubling (DE); WIMMER, Thomas, 93073 Neutraubling (DE)
(74) Vertreter: Benninger, Johannes

(56) Entgegenhaltungen:
- EP-A2- 1 974 895
- JP-A- S58 139 909
- US-A- 4 129 207
- US-A- 5 056 298
- US-A- 5 540 036
- US-A1- 2010 326 015

## Beschreibung

Die vorliegende Erfindung betrifft einen Transportabschnitt zur Zuführung von Artikelzusammenstellungen zu einem Verpackungsmodul, wobei die Artikelzusammenstellungen in einer Transportrichtung zu dem Verpackungsmodul hin bewegt werden, weiterhin ein Verfahren zum Einstellen und/oder Verstellen mindestens einer Transportbahn innerhalb eines Transportabschnitts und eine Verpackungsanlage für Artikelzusammenstellungen gemäß den Merkmalen der Oberbegriffe der Ansprüche 1, 8 und 9.

Die Erfindung betrifft einen Transportabschnitt zur Zuführung von Artikelzusammenstellungen in einer Transportrichtung zu einem Verpackungsmodul, insbesondere ein Überschubmodul zum Überführen von Artikelzusammenstellungen zu einem Folieneinschlagmodul o.ä. In dem Folieneinschlagmodul werden die vorher gruppierten Zusammenstellungen von Artikeln, beispielsweise zwei Artikel oder Gruppen aus 2x2 Artikeln, 2x3 Artikeln, 2x4 Artikeln, 3x4 Artikeln o.ä. auf eine Schrumpffolie übergeschoben. Diese wird dann um die Artikelzusammenstellung herumgeschlagen und vermittels Wärmezufuhr auf diese aufgeschrumpft. Die Artikelzusammenstellungen werden beispielsweise in einer in Transportrichtung vor dem Transportabschnitt angeordneten Gruppierstation vorbereitet und innerhalb des Transportabschnitts gemäß den Produkt- Anforderungen zusammengestellt. In Abhängigkeit von den jeweiligen Produktspezifikationen erfolgt die Verarbeitung der Artikelzusammenstellungen innerhalb des Transportabschnitts einbahnig oder mehrbahnig. Bei einer mehrbahnigen Verarbeitung kann es notwendig sein, die parallel geführten Artikelzusammenstellungen vor dem Folieneinschlagmodul in dem Transportabschnitt entsprechend einem vorgegebenen Folienüberstand voneinander zu beabstanden.

Durch die US 5 056 298 A ist eine Verpackungsmaschine beschrieben, bei welcher Artikel von einem Zuförderer auf eine Überschubplatte übergeben werden. Die Artikel werden auf der Überschubplatte mittels eines Flurstangenförderers in Transportrichtung verschoben und in einem Packmuster für eine bestimmte Ablagekonfiguration gruppiert. Der Überschubplatte ist ein Hemmungsmechanismus mit einem ersten Stiftförderer und zweiten Stiftförderer zugeordnet, mittels welchen die

vorrückenden Artikel auf die Geschwindigkeit des Stiftförderers verlangsamt werden. Die US 5 056 298 A offenbart die Merkmale des Oberbegriffs des Anspruchs 1.

Durch die EP 1 974 895 A2 ist eine Vorrichtung für den Ablauf von Presslingen beispielsweise von Form von Tabletten aus einer Rundläuferpresse mit einem sich unmittelbar an die Rundläuferpresse anschließenden ersten Kanalabschnitt offenbart, an dem sich mindestens zwei Kanalabschnitte anschließen. Den Kanalabschnitten ist eine Weiche zugeordnet, die um eine Achse annähernd senkrecht zur Längserstreckung des ersten und/oder zweiten Kanalabschnitts schwenkbar gelagert ist. Der Weiche ist ein Schwenkantrieb zugeordnet, wobei ein Lagerzapfen für die Weiche drehfest mit einem Kanalabschnitt verbunden ist und wobei der Schwenkantrieb über eine magnetische Koppelung exzentrisch zum Lagerzapfen mit der Weiche gekoppelt ist.

Die Offenlegungsschrift WO 2014/18753 A1 beschreibt eine Vorrichtung zur Herstellung von Gebinden, wobei aus einem breiten Behälterstrom mittels Gasseneinteilung Behälter in mehrere einspurige Behälterströme umgewandelt werden und Behältergruppen gebildet werden, die nachfolgend zu einem Gebinde zusammengefasst werden.

Das Dokument US 4129207 A offenbart eine Vorrichtung zum Ausrichten von Produkten, die in einer Vorwärtsrichtung gefördert werden. Dabei werden die Produkte durch ein Förderelement neu verteilt, um anschließend zu einer angrenzenden Akkumulationsplatte befördert zu werden und dort ineinandergreifende sechseckige enge Packungsgruppen zu bilden. Die weitere Verteilung in Längs- und Querrichtung erfolgt entlang eines nach unten geneigten, angrenzenden Förderers mit einer Reihe von sich erweiternden Abstandshaltern, bis das Produkt schließlich in der gewünschten Weise verteilt ist.

Eine Aufgabe der Erfindung ist es, einen Transportabschnitt für Artikelzusammenstellungen im Zuführbereich zu einem Verpackungsmodul derart auszustatten, dass dieser Transportabschnitt schnell und einfach an die jeweiligen Produktanforderungen angepasst werden kann, wobei insbesondere kein arbeitsaufwändiger Austausch von Formatteilen notwendig ist.

Die obige Aufgabe wird durch einen Transportabschnitt, ein Verfahren zum Einstellen und/oder Verstellen mindestens einer Transportbahn innerhalb eines Transportabschnitts und eine Verpackungsanlage gelöst, die die Merkmale in den Patentansprüchen 1, 8 und 9 umfassen. Weitere vorteilhafte Ausgestaltungen werden durch die Unteransprüche beschrieben.

Die Erfindung bezieht sich auf einen Transportabschnitt zur Zuführung von Artikelzusammenstellungen zu einem Verpackungsmodul, wobei die Artikelzusammenstellungen in einer Transportrichtung zu dem Verpackungsmodul hin bewegt werden. Die Erfindung bezieht sich weiterhin auf ein Verfahren zum Einstellen und/oder Verstellen mindestens einer Transportbahn innerhalb eines Transportabschnitts und eine Verpackungsanlage für Artikelzusammenstellungen.

Eine solche Verpackungsanlage umfasst wenigstens eine Gruppiereinheit zum Zusammenstellen der Artikel und ein Verpackungsmodul, wobei die Gruppiereinheit einen Transportabschnitt zur Zuführung von Artikelzusammenstellungen in einer Transportrichtung zu dem Verpackungsmodul umfasst.

In einem in Transportrichtung vor dem Transportabschnitt angeordneten Förderabschnitt kann eine Einteileinrichtung eine Vorgruppierung der Artikel vornehmen. Insbesondere bilden die Einteileinrichtung und der Transportabschnitt mit nachfolgend näher beschriebenen Schubmitteln für die Artikel die sogenannte Gruppiereinheit. In dem Transportabschnitt erfolgt insbesondere eine abschließende Gruppierung der durch die Einteileinrichtung vorgruppierten Artikel zu der gewünschten Artikelzusammenstellung, wie Sie nachfolgend im Verpackungsmodul vermittels einer Umverpackung zusammengefasst werden soll.

Bei den Artikeln kann es sich beispielsweise um Getränkebehälter wie Flaschen oder Dosen o.ä. handeln. Es kann vorgesehen sein, dass eine Mehrzahl von gleichen oder unterschiedlichen Artikeln entsprechend gruppiert und durch eine Kartonumverpackung, durch eine Umreifung oder mehrere Umreifungen, durch eine Folienverpackung o. dgl. zu einem Gebinde bzw. Mischgebinde zusammengefasst werden soll. Beispielsweise kann eine Mehrzahl von Getränkebehältern durch eine Schrumpfverpackung, durch ein Umreifungsband oder mehrere Umreifungsbänder, eine Kartonumverpackung o.ä. zusammengehalten werden.

Die Artikel werden dem Förderabschnitt vorzugsweise in parallelen Reihen zugeführt. Die parallelen Reihen können beispielsweise durch Gassenbleche oder durch einen räumlichen Abstand voneinander getrennt sein. Eine im Förderabschnitt vorgesehene Artikel- Einteileinrichtung kann insbesondere mit Einteilstäben arbeiten, die sich an den seitlichen Rändern der Artikelumrisse von unterhalb der Förderebene nach oben bewegen und nach erfolgter Ausrichtung, Einteilung und/oder einem Rückhaltevorgang gegenüber den sich ununterbrochen bewegenden Horizontalfördereinrichtungen der Zuführung und des Förderabschnitts für die gewünschte Lückenbildung zwischen aufeinander folgend transportierten Artikelgruppen innerhalb einer Reihe sorgen können.

Der sich an den Förderabschnitt anschließende Transportabschnitt umfasst Gruppiermittel, die für eine gewünschte endgültige Artikelgruppierung nach der Vorgruppierung im voranstehenden Förderabschnitt sorgen kann. Mit Hilfe der Gruppiermittel können im Transportabschnitt insbesondere die später mit einer Umverpackung, beispielsweise einer Umreifung oder Schrumpffolie o.ä. zu umhüllenden Artikelgruppen gebildet werden, die vorzugsweise eine Rechteckformation aufweisen können.

Der Transportabschnitt umfasst eine Überschubplatte, auf der die Artikel der Artikelzusammenstellungen gleitend bewegt werden. Insbesondere sind oberhalb der Überschubplatte angeordnete Schubmittel zum Bewegen der Artikel auf der Überschubplatte vorgesehen. Die Schubmittel sind zumindest bereichsweise in Transportrichtung beweglich und nehmen die Artikel bei dieser Bewegung in Transportrichtung mit. Beispielsweise sind an Schubketten angeordnete Schubbalken vorgesehen, die jeweils von oben her hinter den im Förderabschnitt gebildeten vorgruppierten Artikeln angeordnet werden. Die Schubbalken werden zumindest bereichsweise in Transportrichtung oberhalb der mit einer reibungsarmen Oberfläche ausgestatteten Überschubplatte geführt. Die Schubbalken werden jeweils hinter aus dem Förderabschnitt einlaufenden vorgruppierten Artikeln angeordnet und nehmen diese bei der Bewegung in Transportrichtung mit, wobei die Artikel insbesondere über die Überschubplatte gleiten.

Der Transportabschnitt wird seitlich durch äußere Führungselemente begrenzt. Diese sind vorzugsweise relativ zueinander einstellbar, wodurch die Transportbreite auf der Überschubplatte begrenzt werden kann. Beispielsweise können die äußeren Führungselemente durch seitlich von außen angreifende Schubstangen, Stangengetriebe o.ä. parallel zur Transportrichtung verschoben werden, so dass bei einer Bewegung der äußeren Führungselemente zur Mitte der Überschubplatte hin die Transportbreite verringert wird und bei einer Bewegung der äußeren Führungselemente jeweils zum Rand der Überschubplatte hin die Transportbreite verbreitert wird.

Weiterhin umfasst der Transportabschnitt auf der Überschubplatte angeordnete innere Führungselemente, die durch mindestens einen zumindest teilweise unterhalb der Überschubplatte angeordneten Verstellmechanismus verstellt werden können, um mindestens eine Transportbahn auf der Überschubplatte des Transportabschnitts entsprechend der gewünschten Artikelzusammenstellung(en) auszubilden und einzustellen.

Erfindungsgemäß weist die Uberschubplatte zumindest bereichsweise orthogonal zur Transportrichtung der Artikel auf der Überschubplatte ausgebildete Durchbrüche auf. Insbesondere handelt es sich bei den Durchbrüchen um orthogonal zur Transportrichtung der Artikel ausgebildete Langlöcher oder Schlitze. In diesen Durchbrüchen, insbesondere in den Langlöchern oder Schlitzen, werden zumindest Teile des mindestens einen Verstellmechanismus beweglich geführt.

Beispielsweise umfasst der mindestens eine Verstellmechanismus erste magnetische Mittel an den inneren Führungselementen und innerhalb der Durchbrüche geführte zweite magnetische Mittel. Die zweiten magnetischen Mittel sind insbesondere an unterhalb der Überschubplatte angeordneten Einstellmitteln angeordnet, beispielsweise sind die zweiten magnetischen Mittel auf Schlitten angeordnet, die auf orthogonal zur Transportrichtung ausgebildeten Schlittenführungen geführt sind, so dass die zweiten magnetischen Mittel beim Verschieben der Schlitten an den Schlittenführungen innerhalb der Durchbrüche verschoben werden können. Die Verstellung der Schlitten kann manuell oder automatisiert vermittels eines geeigneten Antriebs erfolgen.

Damit sich die auf der Überschubplatte schiebend bewegten Artikel nicht an den Durchbrüchen der Überschubplatten verhaken bzw. hängen bleiben o.ä., was zu einem Umkippen von Artikeln und somit einer Störung im Produktionsablauf führen könnte, ist darauf zu achten, dass die Breite der Durchbrüche - parallel zur Transportrichtung der Artikel gesehen - möglichst gering ist. Bei Verwendung von magnetisch wirkenden Verstellmechanismen kann auf der Überschubplatte ein nichtmagnetischer Belag angeordnet werden, der die Durchbrüche abdeckt und durch den die Magnetkraft zwischen den ersten und zweiten magnetischen Mitteln hindurch wirkt bzw. durch den die Magnetkraft nicht oder nur unwesentlich gestört wird. Durch einen solchen Belag kann wirksam ein Verhaken o.ä. der auf der Überschubplatte angeschobenen Artikel und somit eine Behinderung in Produktionsablauf verhindert werden.

Weiterhin ist vorgesehen, dass der Transportabschnitt in Transportrichtung in mehrere Segmente eingeteilt ist, wobei jedem Segment zwei innere Führungselemente zugeteilt sind. Die innerhalb eines Segmentes angeordneten inneren Führungselemente sind insbesondere mechanisch derart miteinander verbunden, dass eine Verstellung der Position eines Führungselementes innerhalb eines Segmentes auf der bzw. relativ zu der Überschubplatte gleichzeitig eine Verstellung des anderen inneren Führungselementes innerhalb dieses Segmentes auf der bzw. relativ zu der Überschubplatte bewirkt. Die Verstellbewegung des einen inneren Führungselementes bewirkt beispielsweise eine gegenläufig gerichtete Verstellbewegung des anderen inneren Führungselementes. Alternativ kann die Verstellbewegung des einen inneren Führungselementes auch eine gleichgerichtete Verstellbewegung des anderen inneren Führungselementes bewirken.

Gemäß einer ersten Ausführungsform der Erfindung sind in einem ersten Segment in einem Einlaufbereich des Transportabschnitts zwei erste innere Führungselemente angeordnet, die winklig zur Transportrichtung ausgerichtet sind. Insbesondere sind die zwei ersten inneren Führungselemente in einem Winkel zwischen 0° und 90° zur Transportrichtung angeordnet. Vorzugsweise ist vorgesehen, dass der Winkel der zwei ersten inneren Führungselemente relativ zur Transportrichtung verstellt werden kann, insbesondere in einem Winkel zwischen -90° und 90° zur Transportrichtung.

Weiterhin kann vorgesehen sein, dass zumindest in einem nachfolgend angeordneten Segment zwei zweite innere Führungselemente im Wesentlichen parallel zur Transportrichtung angeordnet sind. Die zwei zweiten inneren Führungselemente sind vorzugsweise senkrecht zur Transportrichtung beweglich ausgebildet, so dass diese in der Regel parallel zur Transportrichtung auf der Überschubplatte verschoben und positioniert werden. Es kann jedoch auch vorgesehen sein, dass die zweiten inneren Führungselemente winklig zur Transportrichtung angeordnet werden können, vorzugsweise in einem Winkel zwischen -50° und 50° zur Transportrichtung. Dies kann insbesondere vorteilhaft sein, wenn die durch die in Transportrichtung auseinander laufenden ersten inneren Führungselemente bewirkte Spreizung der Artikelzusammenstellungen nicht ausreichend den gewünschten Produktspezifikationen bzw. den Anforderungen des nachfolgenden Verpackungsmoduls entspricht.

Die in den aufeinanderfolgenden Segmenten angeordneten inneren Führungselemente können voneinander unabhängig beweglich sein, insbesondere ist keine Verbindung zwischen den in den aufeinanderfolgenden Segmenten angeordneten inneren Führungselementen vorgesehen. Alternativ können die im Wesentlichen in einer Flucht angeordneten inneren Führungselemente miteinander verbunden sein, wobei die Verbindung derart flexibel ausgestaltet sein muss, dass diese eine Verstellung der inneren Führungselemente eines Segmentes erlaubt, ohne dass die inneren Führungselemente der benachbarten Segmente zeitgleich verstellt werden müssen.

Vorzugsweise werden die zweiten inneren Führungselemente des in Transportrichtung nacheinander angeordneten zweiten, dritten, vierten ... usw. Segments jeweils in einer Flucht angeordnet. Dagegen können die ersten inneren Führungselemente im in Transportrichtung zuvorderst angeordneten Segment in einem deutlich abweichenden Winkel zur Transportrichtung ausgerichtet werden. Aus diesem Grund kann es sinnvoll sein, jeweils ein erstes inneres Führungselement vermittels eines Drehgelenks schwenkbeweglich an einem zweiten inneren Führungselement anzuordnen. Alternativ können auch zwischen aufeinanderfolgenden zweiten inneren Führungselementen jeweils geeignete Gelenkverbindungen zur Koppelung der zweiten inneren Führungselemente vorgesehen sein.

So kann beispielsweise vorgesehen sein, dass die zwei ersten inneren Führungselemente in Transportrichtung auseinander laufend angeordnet sind, wobei sich insbesondere die freien Endbereiche der ersten inneren Führungselemente im Einlaufbereich des Transportabschnitts berühren bzw. nahezu berühren. Die beiden ersten inneren Führungselemente bilden somit einen Keil, der den Transportabschnitt in zwei Transportbahnen unterteilt, wobei jeweils eine Außenseite eines inneren Führungselements die Innenführung der jeweiligen Transportbahn bildet und wobei jeweils eine Innenseite eines oben beschriebenen äußeren Führungselements die Außenführung der jeweiligen Transportbahn bildet. Die in Parallelreihen zugeführten vorgruppierten Artikel werden durch den Keil in zwei Artikelzusammenstellungen gruppiert und in die Transportbahnen geleitet. Die zwei Artikelzusammenstellungen können durch den aus den beiden ersten inneren Führungselementen gebildeten Keil derart voneinander beabstandet bzw. aufgespreizt werden, wie es für die nachfolgende Bearbeitung im Verpackungsmodul notwendig ist. Insbesondere werden die zwei Artikelzusammenstellungen gemäß dem Spreizmaß eines nachgeordneten Folieneinschlagmoduls beabstandet bzw. aufgespreizt.

Die beiden ersten inneren Führungselemente können jedoch auch in Transportrichtung aufeinander zulaufend angeordnet werden, wobei insbesondere die freien Endbereiche der ersten inneren Führungselemente im Einlaufbereich des Transportabschnitts maximal voneinander beabstandet sind. Die beiden ersten inneren Führungselemente bilden somit einen sich in Transportrichtung verjüngenden Trichter, der eine Transportbahn auf dem Transportabschnitt definiert. Hierbei bilden jeweils die Innenseiten der inneren Führungselemente die Außenführung der Transportbahn. Die in Parallelreihen zugeführten vorgruppierten Artikel werden durch den Trichter in einer Artikelzusammenstellung zusammengeführt bzw. gruppiert und in die eine, durch die Innenführungen außenseitig begrenzte Transportbahn geleitet und dem nachfolgenden Verpackungsmodul zugeführt.

Gemäß einer weiteren Ausführungsform der Erfindung ist im in Transportrichtung zuvorderst angeordneten Segment im Einlaufbereich des Transportabschnitts ein feststehender Spreizkeil angeordnet. Zumindest in einem nachfolgend angeordneten Segment, vorzugsweise in allen nachfolgend angeordneten Segmenten, sind jeweils zwei verstellbare innere Führungselemente auf der Überschubplatte angeordnet, deren Position auf der Überschubplatte insbesondere parallel zur Transportrichtung und/oder winklig zur Transportrichtung verstellt werden kann.

Vorzugsweise ist an jedem der zwei hinteren Ecken des Keils ein inneres Führungselement des zweiten Segments angeordnet. Insbesondere ist vorgesehen, dass zwischen der jeweilige Ecke und dem jeweiligen Ende des inneren Führungselementes eine schwenkbare Verbindung besteht. Die Einstellung der inneren Führungselemente der nachfolgenden Segmente wird insbesondere derart vorgenommen, dass die inneren Führungselemente in Transportrichtung zwei Reihen ausbilden. Die beiden Reihen sind dabei zumindest bereichsweise parallel zur Transportrichtung und/oder zumindest bereichsweise in Transportrichtung aufeinander zulaufend und/oder zumindest bereichsweise in Transportrichtung auseinandergehend angeordnet, jeweils in Abhängigkeit vom benötigten Spreizmaß gemäß den Anforderungen des nachfolgenden Verpackungsmoduls.

Durch den Spreizkeil wird der Transportabschnitt in zwei Transportbahnen unterteilt. Insbesondere werden die in Parallelreihen zugeführten vorgruppierten Artikel durch den Spreizkeil in zwei Artikelzusammenstellungen gruppiert und in die zwei Transportbahnen geleitet. Hierbei bildet jeweils eine Außenseite des Spreizkeils und die Außenseiten der daran anschließenden inneren Führungselemente die Innenführung der jeweiligen Transportbahn und jeweils eine Innenseite der oben beschriebenen äußeren, im Wesentlichen in einer Flucht angeordneten Führungselemente bildet die Außenführung der jeweiligen Transportbahn. Die notwendige Beabstandung bzw. Aufspreizung der Artikelzusammenstellungen für die nachfolgende Bearbeitung im Verpackungsmodul wird durch die einstellbare Anordnung der inneren Führungselemente der nachfolgenden Segmente ermöglicht.

Die Bewegung der beiden inneren Führungselemente je Segment kann gemäß einer Ausführungsform derart miteinander gekoppelt sein, dass bei einer Bewegung eines inneren Führungselementes in eine Richtung vorzugsweise eine zeitgleiche Bewegung des anderen inneren Führungselementes in die Gegenrichtung erzeugt wird. Beispielsweise sind die zumindest teilweise unterhalb der Überschubplatte und/oder die Überschubplatte zumindest teilweise durchgreifend angeordneten Verstellmittel an einander gegenüberliegenden Bereichen einer umlaufenden Einstellkette angeordnet, wodurch sich bei der Bewegung eines Verstellmittels und des zugeordneten inneren Führungselementes zwangsweise eine Gegenbewegung des andere Verstellmittels und des dem anderen Verstellmittel zugeordneten inneren Führungselementes ergibt.

Wird bei der soeben beschriebenen Ausführungsform mit Spreizkeil dagegen eine einbahnige Zusammenführung mehrerer paralleler Artikelreihen gewünscht - wie dies oben im Zusammenhang mit den ersten und zweiten inneren Führungselementen beschrieben worden ist - so kann der Spreizkeil aus dem Transportabschnitt entnommen und die gewünschte Zusammenführung durch entsprechende Anordnung der inneren Führungselemente der nachfolgenden Segmente erzielt werden. In diesem Fall werden die auf die Überschubplatte einlaufenden und schiebend weiterbewegten Artikel entweder im ersten Segment nicht seitlich geführt, oder aber die äußeren Führungselemente des ersten Segments werden entsprechend positioniert, um die äußere Führung im ersten Segment sicherzustellen.

Gemäß einer weiteren Ausführungsform des mindestens einen Verstellmechanismus für die inneren Führungselemente umfasst dieser ein durch den jeweiligen Durchbruch der Überschubplatte geführtes Verstellelement, dass mit dem inneren Führungselement verbunden ist und über mindestens ein unterhalb der Überschubplatte angeordnetes Einstellmittel innerhalb des Durchbruchs und somit quer zur Transportrichtung der Artikel auf der Überschubplatte bewegt werden kann. Die Bewegung des Einstellmittels bewirkt somit eine Veränderung der Position und/oder Anordnung des zugeordneten inneren Führungselementes auf der Überschubplatte.

Beispielsweise ist das Verstellelement als ein dünnes Blech o.ä. ausgeführt, das innerhalb des Durchbruchs, diesen durchgreifend angeordnet ist und dessen oberes Ende oberhalb der Überschubplatte mit dem inneren Führungselement verbunden ist. Das unterhalb der Überschubplatte angeordnete untere Ende des Blechs o.ä. ist an einem Einstellmittel befestigt, beispielsweise an einer schiebebeweglichen Verstellstange, an einem einer Schlittenführung zugeordneten Schlitten o.ä. Das unterhalb der Überschubplatte angeordnete Einstellmittel werden derart angesteuert, dass das Blech und aufgrund der Koppelung das jeweils zugeordnete innere Führungselement in eine gewünschte Position bewegt werden kann. Die Einstellung kann manuell, halbautomatisch oder vollautomatisch erfolgen. Insbesondere ist eine geeignete Steuerungsvorrichtung vorgesehen, die die Einstellmittel bzw. die den Einstellmitteln zugeordneten Antriebe aufgrund der gewünschten Produktzusammenstellung entsprechend ansteuert.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht einer ersten Ausführungsform einer Verpackungsanlage zum Zusammenstellen von Artikeln als Gebinde.
Fig. 2 zeigt eine schematische Ansicht einer ersten Ausführungsform einer Verpackungsanlage zum Zusammenstellen von Artikeln als Gebinde gemäß Fig. 1 von oben.
Fig. 3 zeigt ein Detail des Überschubbereichs gemäß Fig. 2.
Fig. 4 zeigt eine schematische Darstellung einer ersten Ausführungsform der Verstellung der inneren Führungselemente.
Fig. 5 zeigt eine perspektivische Ansicht eines Überschubbereiches von oben.
Fig. 6 zeigt einen Überschubbereich von unten.
Fig. 7 zeigt eine perspektivische Ansicht eines Überschubbereiches von unten.
Fig. 8 zeigt eine perspektivische Schnittdarstellung durch den Überschubbereich im Bereich der Verstellelemente von oben.
Fig. 9 zeigt eine Schnittdarstellung durch den Überschubbereich im Bereich der Verstellelemente.
Fig. 10 zeigt eine perspektivische Schnittdarstellung durch den Überschubbereich im Bereich der Verstellelemente von unten.
Fig. 11 zeigt die Ausbildung von jeweils zwei parallelen Zusammenstellungen von Artikeln gemäß Fig. 2 im Überschubbereich von oben.
Fig. 12 zeigt eine seitliche Darstellung der Ausbildung von jeweils zwei parallelen Zusammenstellungen von Artikeln gemäß Figuren 2 und 11 im Überschubbereich.
Fig. 13 zeigt die Ausbildung einer einzigen Zusammenstellung von Artikeln im Überschubbereich von oben.
Fig. 14 zeigt eine seitliche Darstellung der Ausbildung einer einzigen Zusammenstellung von Artikeln im Überschubbereich gemäß Fig. 13 von oben.
Fig. 15 zeigt eine zweite Ausführungsform eines Überschubbereiches mit bereichsweise verstellbarer Innenführung.
Fig. 16 zeigt einen Überschubbereich von unten zur Darstellung einer weiteren Ausführungsform einer Verstellung der inneren Führungselemente.
Fig. 17 zeigt eine perspektivische Darstellung eines Überschubbereichs von vorn zur Darstellung der weiteren Ausführungsform einer Verstellung der inneren Führungselemente gemäß Fig. 16.
Fig. 18 zeigt eine schematische Darstellung eines dritten Beispiels der Verstellung der inneren Führungselemente welches nicht Teil der Erfindung ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und/oder das erfindungsgemäße Verfahren ausgestaltet sein können und stellen keine abschließende Begrenzung dar.

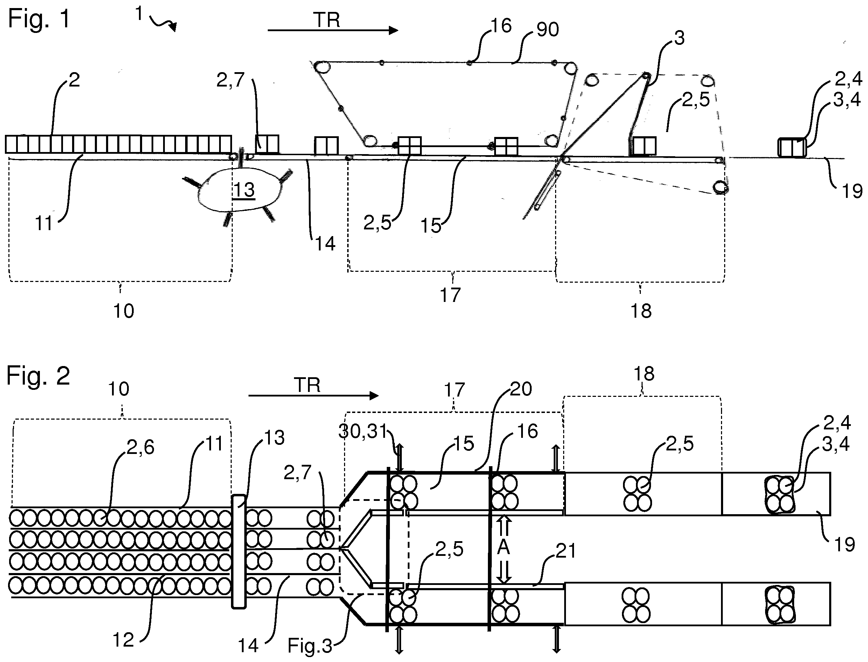

Die schematische Seitenansicht der Fig. 1 zeigt eine erste Ausführungsform einer Verpackungsanlage 1 zum Zusammenstellen von Artikeln 2 als Gebinde 4 in seitlicher Darstellung und Fig. 2 zeigt eine entsprechende Verpackungsanlage 1 von oben. Hierbei wird eine Zusammenstellung 5 von Artikeln 2 durch eine Schrumpffolie 3 oder eine andere geeignete Umverpackung zu einem Gebinde 4 zusammengefasst.

Die Verpackungsanlage 1 umfasst eine Artikelzuführung 10. Hierbei werden die Artikel 2 vorzugsweise in mehreren parallelen Reihen 6 über Fördermittel, beispielsweise ein Förderband 11, in Transportrichtung TR bewegt. Die Reihen 6 können beispielsweise durch Gassenbleche 12 räumlich getrennt voneinander auf dem Förderband 11 bewegt werden. Alternativ erfolgt die Einteilung der Artikel 2 in Parallelreihen in einem davor angeordneten Modul.

Die in Reihen 6 zugeführten Artikel 2 werden in einem nachfolgenden Transportabschnitt vorgruppiert. Beispielsweise werden durch einen Einteiler 13 aus den Reihen 6 jeweils Artikelgruppen 7 abgetrennt, bei denen die gemeinsam gruppierten Artikel 2 jeweils hintereinander angeordnet sind. Die Artikelgruppen 7 werden auf einem weiteren Förderband 14 in Transportrichtung TR zu einem weiteren Transportabschnitt befördert. Bei diesem weiteren Transportabschnitt handelt es sich insbesondere um einen Überschubbereich 17 mit einem Überschubblech 15, inneren Führungselementen 21 und äußeren Führungselementen 20. Insbesondere kann durch die äußeren Führungselemente 20 die zum Artikeltransport zur Verfügung stehende Breite im Überschubbereich 17 angepasst und begrenzt werden. Beispielsweise können die äußeren Führungselemente über geeignete Verstellmittel 30, beispielsweise Verstellspindeln 31 o.ä. vorzugsweise parallelverschieblich zur Transportrichtung TR verstellt werden.

Auf dem Überschubblech 15 werden die Artikelgruppen 7 passiv bewegt, beispielsweise indem sie vermittels Schubstangen 16 angeschoben werden. Die Schubstangen 16 werden beispielsweise durch beidseitig oberhalb des Überschubblechs 15 angeordnete Förderriemen bzw. Schubketten 90 angetrieben, die die Schubstangen 16 zumindest bereichsweise in Transportrichtung TR bewegen. Die an den Schubketten 90 angeordnete Schubbalken 16 werden von oben her hinter den vorgruppierten Artikelgruppen 7 angeordnet. Durch die Bewegung der Schubbalken 16 in Transportrichtung werden die Artikelgruppen 7 auf der mit einer reibungsarmen Oberfläche ausgestatteten Überschubplatte 15 mitgeführt. Anschließend werden die Schubbalken 16 nach oben von den Artikelgruppen wegbewegt und entgegen der Transportrichtung TR oberhalb der nunmehr gebildeten und auf dem Überschubblech 15 geführten Zusammenstellungen 5 zurück geführt. Das Bewegungsprofil der Schubbalken 16 ergibt sich dabei insbesondere durch die Ausbildung und/oder Anordnung der Schubketten 90.

In der Regel werden die Schubbalken 16 mit einer Geschwindigkeit in Transportrichtung TR über das Überschubblech 15 bewegt, die gegenüber der Bewegungsgeschwindigkeit der Artikel 2 auf dem Förderband 14 zumindest geringfügig erhöht ist. Der Abstand der Schubbalken 16 an den Schubketten 90 und/oder die Geschwindigkeit der Schubbalken 16 bewirken eine gewünschte Beabstandung zwischen aufeinanderfolgenden Artikelgruppen 7. In dieser Weise werden mehrere Artikelgruppen 7 in dem Überschubbereich 17 zu Zusammenstellungen 5 zusammengestellt. Eine solche Zusammenstellung 5 enthält die Anzahl und Anordnung an Artikeln 2, wie sie im fertigen Gebinde 4 zu finden sind. Parallel geführte Zusammenstellungen 5 von Artikeln 2 werden zudem im Überschubbereich 17 entsprechend dem Spreizmaß im Folieneinschlagmodul 18 voneinander beabstandet.

Hierzu sind im Überschubbereich 17 äußere Führungselemente 20 und innere Führungselemente 21 vorgesehen. Die äußeren Führungselemente 20 sind im Wesentlichen orthogonal zur Transportrichtung TR einstellbar. Somit kann die äußere Breite der Transportspur auf dem Überschubblech 15 eingestellt werden. Die einstellbaren inneren Führungselemente 21 dienen der entsprechenden Beabstandung der Zusammenstellungen 5 von Artikeln 2.

Das erforderliche Spreizmaß bzw. der notwendige Abstand A wird durch den vorgegebenen Folienüberstand im Folieneinschlagmodul 18 definiert und ist produktabhängig. Herkömmlicherweise wird die erforderliche Spreizung zwischen den durch Vorgruppierung gebildeten parallelen Artikelgruppen 7 beispielsweise im Überschubbereich 17 über einen Spreizkeil eingestellt. Die dermaßen beabstandeten Zusammenstellungen 5 von Artikeln werden anschließend bis zum Folieneinschlagmodul 18 parallel weitergeführt. Aktuell werden die benötigten Spreizkeile und die inneren Führungen in dem Überschubbereich 17 einer sogenannten Gebindeformeinheit von der Auftragsabwicklung produktspezifisch erstellt. Bei Nachrüstungen müssen u.U. produktspezifisch neue Spreizkeile und Führungen erstellt werden. Diese müssen bei Sortenumstellung vom Bediener gewechselt werden, was aufgrund hoher Umstellzeiten zu entsprechenden Produktionsausfallzeiten führt. Aufgrund eines ständig wachsenden Sortiments neuer Produkte ist eine Automatisierung von Formatteilwechseln schwierig und aufwändig, da insbesondere bei neuen Produkten gegebenenfalls erst neue Formatteile entworfen und hergestellt werden müssen.

Vermittels der insbesondere stufenlos einstellbaren inneren Führungselemente 21 ist eine Anpassung der Verpackungsanlage 1, insbesondere des Überschubbereiches 17 der Verpackungsanlage 1, bei einem Produktwechsel besonders schnell und einfach realisierbar. Insbesondere müssen keine Formatteile ausgetauscht und zwischenzeitlich gelagert werden. Die Einstellung der inneren Führungselemente 21 erfolgt - wie nachfolgend detailliert ausgeführt - über eine Verstellung von unten her.

Die im Überschubbereich 17 abgetrennten Zusammenstellungen 5 von Artikeln 2 werden im nachfolgend angeordneten Folieneinschlagmodul 18 mit Schrumpffolie 3 umhüllt und über ein weiteres Förderband 19 einer Schrumpfvorrichtung (nicht dargestellt) zugeführt. In der Schrumpfvorrichtung wird die Schrumpffolie 3 auf die Artikel 2 der Zusammenstellung 5 aufgeschrumpft, wodurch ein fertiges Gebinde 4 gebildet wird.

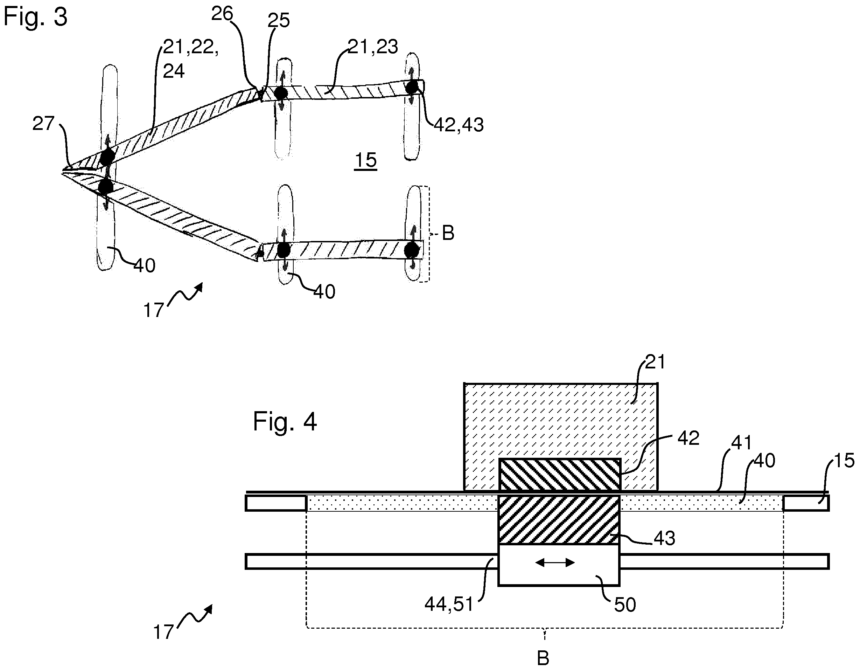

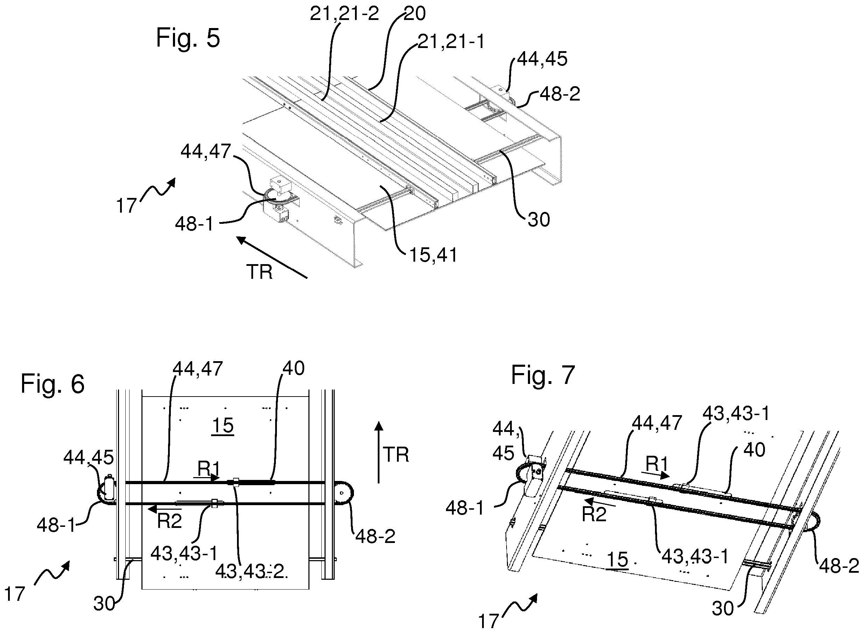

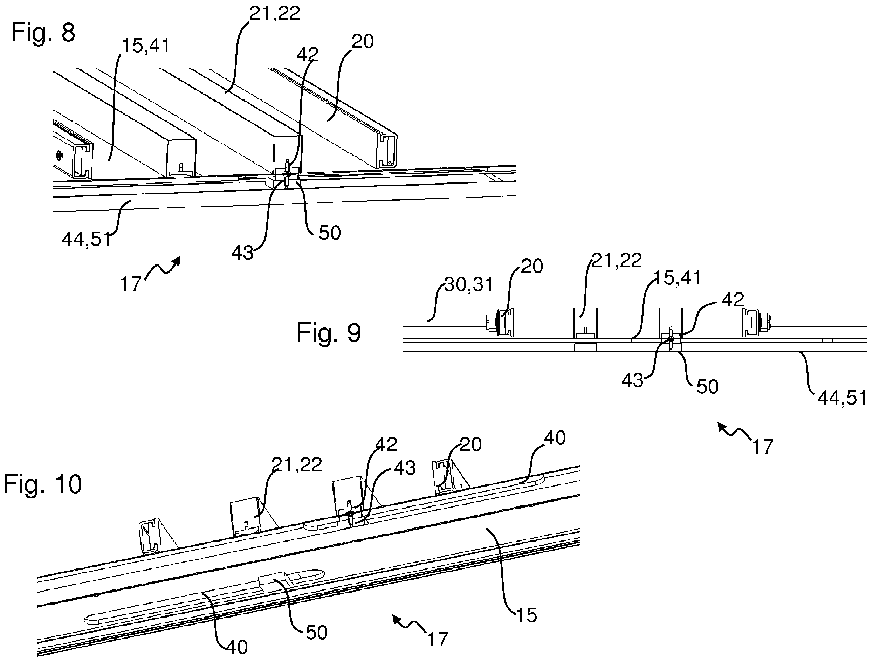

Die Fig. 3 zeigt ein Detail des Überschubbereichs 17 gemäß Fig. 2, insbesondere die inneren Führungselemente 21 und deren Verstellbarkeit. Figuren 4 bis 10 zeigen in verschiedene Ansichten einer ersten Ausführungsform der Verstellung der inneren Führungselemente 21. Insbesondere stellt Fig. 4 eine schematische Darstellung dar; Fig. 5 zeigt eine perspektivische Ansicht eines Überschubbereiches 17 von oben; Fig. 6 zeigt einen Überschubbereich 17von unten, und Fig. 7 zeigt eine perspektivische Ansicht eines Überschubbereiches 17 von unten. Weiterhin zeigen die Figuren 8 bis 10 verschiedene Schnittdarstellungen durch den Überschubbereich 17 im Bereich der Verstellelemente für die inneren Führungselemente 21.

Bei den inneren Führungselementen 21 unterscheidet man insbesondere zwischen ersten inneren Führungselementen 22 und zweiten inneren Führungselementen 23. Die ersten inneren Führungselemente 22 sind an einem Ende 26 über einen Drehpunkt 25 dreh- oder schwenkbeweglich an den zweiten inneren Führungselementen 23 angeordnet. Das gegenüberliegende Ende 27 der ersten inneren Führungselemente 22 ist frei und derart abgeschrägt, dass die beiden Enden 27 der zwei ersten inneren Führungselemente einander berühren und eine Spitze des verstellbaren Spreizkeils 24 ausbilden können.

Gemäß der ersten Ausführungsform werden die inneren Führungselemente 21, 22, 23 vermittels einer magnetischen Kopplung von unten verstellt. Die Überschubplatte 15 ist im Verstellbereich geschlitzt oder mit Langlöchern 40 versehen. Auf diese Überschubplatte 15 kann beispielsweise ein durchgängiger Kunststoff oder ein anderer geeigneter, nichtmagnetischer Belag 41 aufgebracht, beispielsweise geklebt, werden. Dadurch ergibt sich eine durchgängige Oberfläche ohne Störstellen, an denen sich die Artikel 2 verhaken könnten und wodurch der Transport der Artikel 2 behindert werden könnte. Auf der Unterseite des inneren Führungselementes 21 ist ein Magnet 42 befestigt, der auf der Überschubplatte 15 aufliegt. Unter der Überschubplatte 15 ist im Bereich des jeweiligen Langlochs 40 ein Gegenmagnet 43 im Langloch 40 verschiebbar angebracht. Beispielsweise ist der Gegenmagnet 43 auf einem verfahrbaren Schlitten 50 o.ä. angeordnet, der über eine Schlittenführung 51 in einem durch das Langloch 40 definierten Bewegungsbereich B verfahren werden kann. Durch den nichtmagnetischen Belag 41 hinweg ziehen sich die Magnete 42, 43 an, und richten sich zueinander aus. Verstellt man nun die Position des unteren Gegenmagnets 43 über geeignete Einstellmittel 44 z.B. durch eine Kurbel, über einen elektrischen Antrieb 45 (vgl. Figuren 5 bis 7) o.ä., wird durch die magnetische Kopplung zwischen Magnet 42 und Gegenmagnet 43 das zugeordnete innere Führungselement 21 entsprechend verstellt.

Insbesondere ist es gemäß dargestellter erster Ausführungsform möglich, durch die ersten inneren Führungselemente 22 die Spreizung der Artikelgruppen 7 (vgl. Figuren 1 und 2) stufenlos verstellbar zu gestalten und das Formatteil eines Spreizkeils komplett entfallen zu lassen. Insbesondere bilden zwei erste innere Führungselemente 22 einen sogenannten geteilten, verstellbaren Spreizkeil 24.

Weiterhin ist in den Figuren 5 bis 7 erkennbar, dass die Verstellung der beiden innenliegenden Führungselemente 21-1, 21-2 miteinander gekoppelt ist. Der Verstellmechanismus umfasst bei diesem Ausführungsbeispiel eine unterhalb der Überschubplatte 15, quer zur Transportrichtung TR angeordnete, umlaufende Einstellkette 47, an der die beiden Gegenmagneten 43-1 und 43-2 derart befestigt sind, dass diese bei Bewegung der Einstellkette 47 gegenläufige Bewegungen ausführen. Insbesondere weist die Einstellkette 47 zwei Umlenkbereiche 48-1, 48-2 auf, zwischen denen ein ersten Teilbereich der Einstellkette 47 eine Bewegung in eine erste Bewegungsrichtung R1 und ein gegenüberliegender, zweiter Teilbereich der Einstellkette 47 eine Bewegung in eine zweite, gegenläufige Bewegungsrichtung R2 ausführt. Insbesondere ist der Gegenmagnet 43-1 in dem ersten Teilbereich an der Einstellkette 47 zwischen den beiden Umlenkbereichen 48-1 und 48-2 befestigt und einem Langloch 40 zugeordnet und der Gegenmagnet 43-2 ist in dem zweiten Teilbereich an der Einstellkette 47 zwischen den beiden Umlenkbereichen 48-1 und 48-2 befestigt und einem Langloch 40 zugeordnet.

Bei einer nach innen gerichteten Bewegung des Gegenmagneten 43-1 erfolgt synchron dazu eine nach innen gerichtete Bewegung des Gegenmagneten 43-2. Die Bewegung der Gegenmagneten 43-1, 43-2 wird über die an den inneren Führungselementen 21-1, 21-2 angeordneten Magneten 42 (in den Figuren 5 bis 7 nicht sichtbar, vgl. Figuren 8 bis 10) auf die inneren Führungselemente 21-1, 21-2 übertragen. Dementsprechend bewegen sich die inneren Führungselemente 21-1, 21-2 aufeinander zu. Bei einer nach außen gerichteten Bewegung des Gegenmagneten 43-1 erfolgt synchron dazu eine nach außen gerichtete Bewegung des Gegenmagneten 43-2. Dementsprechend bewegen sich die über die Magneten 42 bewegungstechnisch an die Gegenmagneten 43-1, 43-2 gekoppelten inneren Führungselemente 21-1, 21-2 voneinander weg.

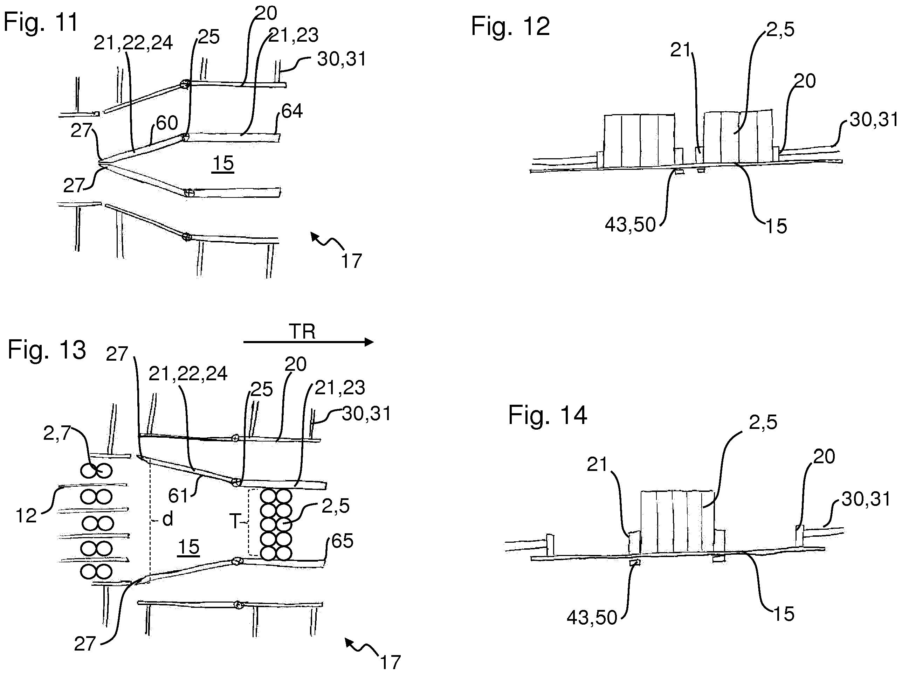

Die schematische Draufsicht der Fig. 11 zeigt eine erste Anordnung der inneren Führungselemente 21, 22, 23, wodurch die Ausbildung von jeweils zwei parallelen Zusammenstellungen 5 von Artikeln 2 gemäß Fig. 2 im Überschubbereich 17 erzeugt wird von oben und Fig. 12 zeigt eine entsprechende Darstellung in der Seitenansicht.

Die ersten inneren Führungselemente 22 sind zueinander geneigt angeordnet, so dass sich die freien Ende 27 der beiden ersten inneren Führungselemente 22 annähern bzw. berühren. Dadurch fungieren die nach außen gerichteten Seiten 60 der beiden ersten inneren Führungselemente 22 sowie die nach außen gerichteten Seiten 64 der zweiten inneren Führungselemente 23 jeweils als innere Führung für die abgetrennten Zusammenstellungen von Artikeln (nicht dargestellt, vgl, Fig. 2), während die äußeren Führungselemente 20 die äußere Führung innerhalb des Überschubbereiches 17 bilden.

Die weitere schematische Draufsicht der Fig. 13 zeigt eine zweite Anordnung der inneren Führungselemente 21, 22, 23, wodurch die Ausbildung einer einzigen Zusammenstellung 5 von Artikeln 2 im Überschubbereich 17 erzeugt wird von oben und Fig. 14 zeigt eine entsprechende Darstellung in der Seitenansicht.

Die ersten inneren Führungselemente 22 sind auseinander geneigt angeordnet, so dass ein Abstand d zwischen den freien Enden 27 der beiden ersten inneren Führungselemente 22 ausgebildet ist, der größer ist als eine Tiefe T der Zusammenstellung 5 der Artikel 2 quer zur Transportrichtung TR. Dadurch fungieren die nach innen gerichteten Seiten 61 der beiden ersten inneren Führungselemente 22 jeweils als äußere Führung für die abgetrennten Zusammenstellungen 5 von Artikeln 2, so dass die in Artikelgruppen 7 ankommenden Artikel 2 zusammengeführt werden. Zudem fungieren die nach innen gerichteten Seiten 65 der in Transportrichtung TR nachfolgend angeordneten zweiten inneren Führungselemente 23 ebenfalls als äußere Führung für die weiterführende Bewegung der zusammengeführten Zusammenstellung 5 von Artikeln 2 in Transportrichtung TR.

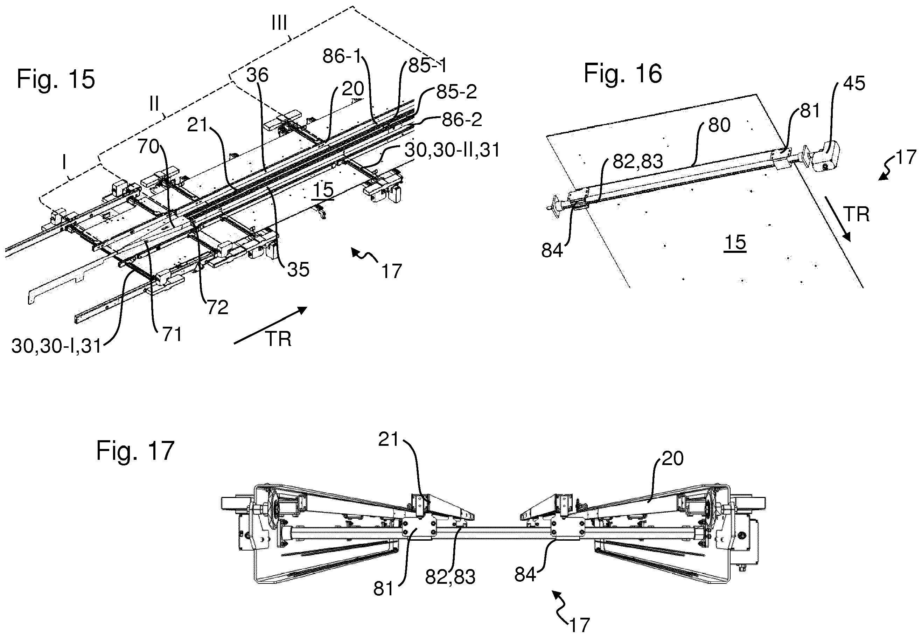

Die perspektivische Ansicht der Fig. 15 zeigt eine zweite Ausführungsform eines Überschubbereiches 17 mit einer bereichsweise verstellbaren Innenführung. Bei dieser Ausführungsform ist in einem in Transportrichtung TR zuerst angeordneten Transportsegment I des Überschubbereiches 17 ein feststehender Spreizkeil 70 vorgesehen, an den in einem angrenzenden zweiten Transportsegment II von unten einstellbare innere Führungselemente 21 anschließen. Die äußeren Seiten der inneren Führungselemente 21 bilden jeweils die innere Führung der zu bildenden Artikelzusammenstellungen (nicht dargestellt). Weiterhin sind äußere Führungselemente 20 vorgesehen, die in bekannter Weise von auf der Überschubplatte 15 angeordneten Verstellelementen 30 eingestellt werden können, um die äußere Breite der Transportspur festzulegen. Die Verstellelemente 30 wirken dabei im Wesentlichen senkrecht auf die parallel zur Transportrichtung TR angeordneten äußeren Führungselemente 20 ein. Insbesondere können die äußeren Führungselemente 20 in den Transportsegmenten I und II jeweils eigene Verstellelemente 30-I, 30-II aufweisen und somit unabhängig voneinander einstellbar sein. Die in Transportrichtung TR hinter dem Spreizkeil 70 angeordneten inneren Führungselemente 21 können in Analogie zu der oben beschriebenen ersten Ausführungsform von unten her verstellt werden. Dabei kann in Abhängigkeit von den Anforderungen der gewünschten Produktzusammenstellung und des nachfolgenden Verpackungsmoduls vorgesehen werden, dass die inneren Führungselemente 21 parallel zur Transportrichtung TR und/oder winklig zur Transportrichtung TR angeordnet und/oder verstellt werden können.

Weiterhin kann vorgesehen sein, dass die äußeren Führungselemente 20 zumindest bereichsweise in Transportrichtung TR auseinander führend oder zueinander führend eingestellt werden können. Analog dazu werden die inneren Führungselemente 21 zumindest bereichsweise auseinander führend oder zueinander führend eingestellt, um die Artikelzusammenstellungen auf das entsprechende Spreizmaß für das nachfolgend angeordnete Folieneinschlagmodul (nicht dargestellt) zu bringen.

Vorzugsweise ist an jedem der zwei hinteren Ecken 72 des Spreizkeils 70 ein inneres Führungselement 21 des zweiten Transportsegments II angeordnet. Insbesondere ist vorgesehen, dass zwischen der jeweilige Ecke 72 und dem jeweiligen freien Ende des inneren Führungselementes 21 eine schwenkbare Verbindung besteht. Die Einstellung der inneren Führungselemente 21 im zweiten Transportsegment II und ggfl. weiterer nachfolgender Transportsegmente III etc. wird insbesondere derart vorgenommen, dass die inneren Führungselemente 21 in Transportrichtung TR zwei Reihen 85-1, 85-2 ausbilden. Die beiden Reihen 85-1, 85-2 sind dabei zumindest bereichsweise parallel zur Transportrichtung TR und/oder zumindest bereichsweise in Transportrichtung TR aufeinander zulaufend und/oder zumindest bereichsweise in Transportrichtung TR auseinandergehend angeordnet, jeweils in Abhängigkeit vom benötigten Spreizmaß.

Der Spreizkeil 70 unterteilt den Überschubbereich 17 in zwei Transportbahnen 86-1 und 86-2. Insbesondere werden jeweils mehrere der in Parallelreihen zugeführten vorgruppierten Artikel 2 (vgl. Figuren 1 und 2) durch den Spreizkeil 70 in zwei Artikelzusammenstellungen 5 gruppiert und in die zwei Transportbahnen 86-1 und 86-2 geleitet. Hierbei bildet jeweils eine Außenseite 71 des Spreizkeils 70 und die Außenseiten 35 der daran anschließenden inneren Führungselemente 21 die Innenführung der jeweiligen Transportbahn 86-1, 86-2 und jeweils eine Innenseite 36 der oben beschriebenen äußeren, im Wesentlichen in einer Flucht angeordneten Führungselemente 20 bildet die Außenführung der jeweiligen Transportbahn 86-1, 86-2. Die notwendige Beabstandung bzw. Aufspreizung der Artikelzusammenstellungen 5 für die nachfolgende Bearbeitung im Verpackungsmodul 18 (vergleiche Figuren 1 und 2) wird durch die einstellbare Anordnung der inneren Führungselemente 21 der nachfolgenden Transportsegmente II, III usw. und der äußeren Führungselemente 20 des ersten, zweiten und nachfolgender Transportsegmente I, II, III usw. ermöglicht.

Die perspektivische Ansicht der Fig. 16 zeigt einen Überschubbereich 17 von unten zur Darstellung einer weiteren Ausführungsform einer Verstellung der inneren Führungselemente (nicht dargestellt). Die Fig. 17 zeigt eine perspektivische Darstellung des Überschubbereichs 17 von vorn zur Darstellung der weiteren Ausführungsform einer Verstellung der inneren Führungselemente gemäß Fig. 16. Zur erleichterten Ansicht wurde in Fig. 17 die Überschubplatte 15 weggelassen

Bei der hier dargestellten Ausführungsform ist ein durch die Überschubplatte 15 durchgehender Schlitz 80 (vgl. Fig. 16) quer zur Transportrichtung TR vorgesehen. Durch den Schlitz 80 wird ein dünnes Blech 81 geführt, an dem das jeweilige innere Führungselement 21 (vgl. Fig. 17) befestigt ist. Unterhalb der Überschubplatte 15 ist das Blech 81 über einen entsprechenden Verstellmechanismus zumindest bereichsweise senkrecht zur Transportrichtung TR der Artikel (nicht dargestellt) auf der Überschubplatte 15 beweglich angeordnet. Beispielsweise ist das innere Führungselement 21 an einer senkrecht zur Transportrichtung TR unterhalb der Überschubplatte 15 angeordnete Verstellstange 82 schiebebeweglich angeordnet. In der Darstellung der Fig. 16 sind die Bleche 81 und somit die inneren Führungselemente 21 (vgl. Fig. 17) im Randbereich der Überschubplatte 15 angeordnet. Diese Situation liegt in der Regel nur im Erstmontagebetrieb vor, wenn die inneren Führungselemente 21 über den durch Blech 81, Verstellstange 82 und ggfl. geeigneten Antrieb 45 gebildeten Verstellmechanismus erstmalig im mittigen Bereich der Überschubplatte 15 positioniert werden, wie dies beispielsweise in Fig. 17 dargestellt ist.

Bei dieser Ausführungsform ist insbesondere darauf zu achten, die Schlitze 80 so eng wie möglich auszuführen, damit diese den Überschub der Artikel (nicht dargestellt) über die Überschubplatte 15 nicht behindern.

Wie bereits im Zusammenhang mit der in den Figuren 5 bis 7 dargestellten Ausführungsform beschrieben, ist die Verstellung der inneren Führungselemente 21 innerhalb einer Transportsegmentes II, III usw. jeweils miteinander gekoppelt. Beispielsweise kann die Verstellstange 82 als Spindelstange 83 mit einem Außengewinde ausgebildet sein und das Blech 81 kann unterhalb des Überschubblechs 15 an einem Schlitten 84 mit einem Innengewinde befestigt sein. Die Spindelstange 83 kann beispielsweise hälftig ein rechtsgängiges Außengewinde aufweisen, während die andere Hälfte der Spindelstange 83 mit einem linksgängigen Außengewinde ausgestattet ist. Die Schlitten 84 weisen je nach Zuordnung zu der einen oder der anderen Hälfte der Spindelstange 83 ein entsprechendes Innengewinde auf. Durch Drehung der Spindelstange 83 werden nunmehr beide Schlitten 84 mit jeweils zugeordnetem Blech 81 und innerem Führungselement 21 jeweils nach innen oder nach außen bewegt, d.h., die inneren Führungselemente 21 bewegen sich entweder aufeinander zu oder voneinander weg. Alternativ kann auch bei dieser Ausführungsform vorgesehen sein, dass die inneren Führungselemente 21 jeweils einen eigenen, unabhängigen Antrieb aufweisen und somit unabhängig voneinander eingestellt werden können, wodurch die Flexibilität des Gesamtsystems weiter erhöht wird.

Wird dagegen bei der in den Figuren 15 bis 17 dargestellten Ausführungsform mit Spreizkeil 70 eine einbahnige Zusammenführung mehrerer paralleler, vorgruppierter Artikelreihen gemäß Fig. 13 gewünscht, kann der Spreizkeil 70 aus dem ersten Transportsegment I des Überschubbereichs 17 entnommen und die gewünschte Zusammenführung durch entsprechende Anordnung der inneren Führungselemente 21 der nachfolgenden Transportsegmente II, III usw. erzielt werden. In diesem Fall werden die auf das Überschubblech 15 einlaufenden und schiebend weiterbewegten Artikel 2 (vergleiche Figuren 1 und 2) entweder im ersten Transportsegment I nicht seitlich geführt, oder aber die äußeren Führungselemente 20 des ersten Transportsegments I werden entsprechend positioniert, um die äußere Führung der Artikel im ersten Transportsegment I sicherzustellen.

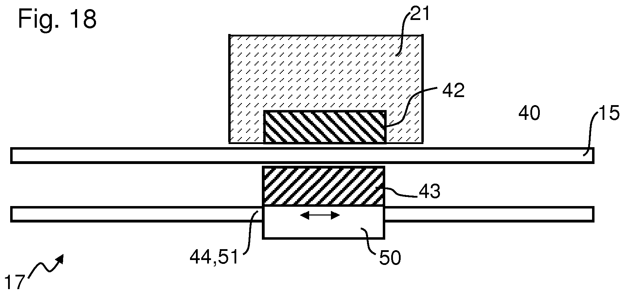

Die Fig. 18 zeigt eine schematische Darstellung eines dritten Beispiels der Verstellung der inneren Führungselemente 21 welches nicht Teil der beanspruchten Erfindung ist, insbesondere werden die inneren Führungselemente 21 analog zu der in Fig. 4 dargestellten ersten Ausführungsform vermittels einer magnetischen Kopplung von unten verstellt. Auf der Unterseite des inneren Führungselementes 21 ist ein Magnet 42 befestigt, der auf der Überschubplatte 15 aufliegt. Unter der Überschubplatte 15 ist ein Gegenmagnet 43 quer zur Transportrichtung der Artikel (nicht dargestellt) beweglich angeordnet. Der Magnet 42 und der Gegenmagnet 43 müssen eine ausreichende Magnetkraft aufweisen, die durch die Überschubplatte 15 hindurch wirkt.

Verstellt man nun die Position des unteren Gegenmagnets 43 über geeignete Einstellmittel 44 z.B. durch eine Kurbel o.ä., wobei die Verstellung manuell, über einen elektrischen Antrieb 45 (vgl. Figuren 5 bis 7) o.ä. erfolgen kann, wird durch die magnetische Kopplung zwischen Magnet 42 und Gegenmagnet 43 das zugeordnete innere Führungselement 21 entsprechend verstellt. Somit ist es auch mit dieser dritten Ausführungsform möglich, durch die ersten inneren Führungselemente 22 die Spreizung der Artikelgruppen 7 (vgl. Figuren 1 und 2) stufenlos verstellbar zu gestalten und gegebenenfalls das Formatteil eines Spreizkeils komplett entfallen zu lassen.

Mit den hier beschriebenen inneren Führungselementen 21, die vermittels mindestens eines zumindest bereichsweise unterhalb des Überschubblechs 15 angeordneten Verstellmechanismus gemäß den gewünschten Produktanforderungen eingestellt bzw. verstellt werden können, ist somit die Anpassung der Führungen und Transportbahnen eines Überschubbereiches 17 einer Gruppiereinheit bei einem Produktwechsel schnell und einfach möglich. Der Umstellungsvorgang kann durch Verwendung von Stellantrieben oder anderen geeigneten Mitteln problemlos automatisiert werden. Durch das Wegfallen von speziell an die jeweiligen Produktanforderungen angepassten Formatteilen entfallen zeitaufwändige Demontage und Montagearbeiten. Zudem müssen nunmehr nicht Formatteile für einen entsprechenden Umbau vorgehalten und zwischenzeitlich gelagert werden. Insbesondere entfällt die kundenspezifische Konstruktion verschiedener Spreizmaße. Eine Produktumstellung ist somit ohne zeitlichen Vorlauf - der herkömmlicherweise für die Bereitstellung neuer produktspezifischer Formatteile notwendig war - möglich.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind. Insbesondere kann eine Verstellung des Gegenmagneten 43 (vgl. bspw. Fig. 4) auch vermittels eines geeigneten Spindelmechanismus oder anderer geeigneter Verstellmechanismen erfolgen. Auch kann ein das Überschubblech 15 im Bereich eines Langlochs 40 oder eines Schlitzes 80 durchdringendes Blech 81 an einer umlaufenden Führungskette angeordnet sein (wie dies bspw. in den Figuren 6 und 7 dargestellt ist), die die gewünschte Verschiebung und/oder Anordnung des Blechs 81 innerhalb des Langlochs 40 bzw. des Schlitzes 80 durch eine entsprechende Bewegung desselben ermöglicht.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Verpackungsanlage
- 2: Artikel
- 3: Schrumpffolie
- 4: Gebinde
- 5: Zusammenstellung
- 6: Artikelreihe
- 7: Artikelgruppe
- 10: Artikelzuführung
- 11: Förderbahn
- 12: Gassenblech
- 13: Einteile
- 14: Förderband
- 15: Überschubblech
- 16: Schubstange
- 17: Überschubbereich
- 18: Folieneinschlagmodul
- 19: Förderband
- 20: äußeres Führungselement
- 21: inneres Führungselement
- 22: erstes inneres Führungselement
- 23: zweites inneres Führungselement
- 24: Verstellbarer Spreizkeil
- 25: Drehpunkt
- 26: erstes Ende
- 27: zweites (freies) Ende
- 30, 30-I, 30-II: Verstellmittel
- 31: Verstellspindel
- 35: Außenseite
- 36: Innenseite
- 40: Langloch
- 41: Belag
- 42: Magnet
- 43, 43-1, 43-2: Gegenmagnet
- 44: Einstellmittel
- 45: Antrieb
- 47: Einstellkette
- 48-1,48-2: Umlenkbereich
- 50: Schlitten
- 51: Schlittenführung
- 60: nach außen gerichtete Seite
- 61: nach innen gerichtete Seite
- 64: nach außen gerichtete Seite
- 65: nach innen gerichtete Seite
- 70: Spreizkeil
- 71: Außenseite
- 72: Ecke
- 80: Schlitz
- 81: Blech
- 82: Verstellstange
- 83: Spindelstange
- 85-1,85-2: Reihe
- 86-1,86-2: Transportspur
- 90: Schubkette
- A: Abstand
- B: Bewegungsbereich
- d: Abstand
- I, II, III: Transportsegment
- R1, R2: Bewegungsrichtung
- T: Tiefe
- TR: Transportrichtung

## Patentansprüche

1. Transportabschnitt (17) zur Zuführung von Artikelzusammenstellungen (5) in einer Transportrichtung (TR) zu einem Verpackungsmodul (18) für die Artikelzusammenstellungen (5) umfassend
eine Überschubplatte (15), auf der die Artikel (2) der Artikelzusammenstellungen (5) in Transportrichtung (TR) gleitend beweglich sind;
oberhalb der Überschubplatte (15) angeordnete Schubmittel (16) zum Bewegen der Artikel (2) auf der Überschubplatte (15), wobei die Schubmittel (16) zumindest bereichsweise in Transportrichtung (TR) beweglich sind;
auf der Überschubplatte (15) angeordnete, den Transportabschnitt (17) seitlich begrenzende äußere Führungselemente (20); und
auf der Überschubplatte (15) angeordnete innere Führungselemente (21), wobei die inneren Führungselemente (21) durch mindestens einen zumindest teilweise unterhalb der Überschubplatte (15) angeordneten Verstellmechanismus verstellbar sind, wobei der Transportabschnitt (17) in Transportrichtung in mehrere Segmente eingeteilt ist, wobei jedem Segment zwei innere Führungselemente (21) zugeteilt sind, **dadurch gekennzeichnet, dass**
die Überschubplatte (15) zumindest bereichsweise orthogonal zur Transportrichtung (TR) der Artikel (2) ausgebildete Durchbrüche aufweist, insbesondere orthogonal zur Transportrichtung (TR) der Artikel (2) ausgebildete Langlöcher (40) oder Schlitze (80), dass zumindest Teile des Verstellmechanismus innerhalb der Durchbrüche beweglich geführt sind, insbesondere wobei zumindest Teile des mindestens einen Verstellmechanismus innerhalb der Langlöcher (40) oder Schlitze (80) beweglich geführt sind, und dass der mindestens eine Verstellmechanismus der beiden inneren Führungselemente (21) eines Segmentes gekoppelt ist, so dass die beiden inneren Führungselemente (21) eines Segmentes miteinander einstellbar sind.

2. Transportabschnitt nach Anspruch 1, wobei der mindestens eine Verstellmechanismus erste magnetische Mittel (42) an den inneren Führungselementen (21) umfasst und wobei der Verstellmechanismus innerhalb der Durchbrüche geführte zweite magnetische Mittel (43) umfasst.

3. Transportabschnitt nach Anspruch 2, wobei auf der Überschubplatte (15) ein
nichtmagnetischer Belag (41) angeordnet ist, der die Durchbrüche abdeckt.

4. Transportabschnitt nach Anspruch 1, wobei in einem ersten Segment in einem
Einlaufbereich des Transportabschnitts (17) zwei erste innere Führungselemente (22) angeordnet sind, die winklig zur Transportrichtung (TR) angeordnet sind, wobei der Winkel der zwei ersten inneren Führungselemente (22) relativ zur Transportrichtung (TR) einstellbar ist.

5. Transportabschnitt nach Anspruch 4, wobei zumindest in einem nachfolgend
angeordneten Segment zwei zweite innere Führungselemente (23) parallel zur Transportrichtung (TR) angeordnet sind, wobei die zwei zweiten inneren Führungselemente (23) senkrecht zur Transportrichtung (TR) beweglich ausgebildet sind.

6. Transportabschnitt nach Anspruch 5, wobei jeweils ein erstes inneres
Führungselement (22) vermittels eines Drehgelenks (25) schwenkbeweglich an einem zweiten inneren Führungselement (23) angeordnet ist.

7. Transportabschnitt nach Anspruch 1, wobei in einem ersten Segment in einem
Einlaufbereich des Transportabschnitts (17) ein Spreizkeil (70) und wobei zumindest in einem nachfolgend angeordneten Segment zwei verstellbare innere Führungselemente (21) angeordnet sind, wobei die inneren Führungselemente (21) parallel zur Transportrichtung (TR) und/oder winklig zur Transportrichtung (TR) einstellbar sind.

8. Verfahren zum Einstellen und/oder Verstellen mindestens einer Transportbahn innerhalb eines Transportabschnitts (17) gemäß einem der Ansprüche 1 bis 7, welcher Transportabschnitt (17) zur Zuführung von Artikelzusammenstellungen (5) in einer Transportrichtung (TR) zu einem Verpackungsmodul (18) für die Artikelzusammenstellungen (5) ausgebildet ist, wobei die Artikel (2) der Artikelzusammenstellungen (5) innerhalb des Transportabschnitts (17) in Transportrichtung (TR) auf einer Überschubplatte (15) gleitend bewegt werden, wobei zur Einstellung der mindestens einen Transportbahn auf der Überschubplatte (15) angeordnete innere Führungselemente (21) durch mindestens einen zumindest teilweise unterhalb der Überschubplatte (15) angeordneten Verstellmechanismus entsprechend der gewünschten Artikelzusammenstellungen (5) eingestellt werden.

9. Verpackungsanlage (1) für Artikelzusammenstellungen (5) mit einer Gruppiereinheit zum Zusammenstellen der Artikel (2) und einem Verpackungsmodul (18), wobei die Gruppiereinheit einen Transportabschnitt (17) zur Zuführung von Artikelzusammenstellungen (5) in einer Transportrichtung (TR) zu dem Verpackungsmodul (18) gemäß einem der Ansprüche 1 bis 7 umfasst.

## Claims

1. A transport section (17) for feeding article assemblies (5) in a transport direction (TR) to a packaging module (18) for the article assemblies (5), the transport section (17) comprising
a transfer plate (15) on which the articles (2) of the article assemblies (5) are slidingly movable in the transport direction (TR);
pushing means (16) arranged above the transfer plate (15) for moving the articles (2) on the transfer plate (15), the pushing means (16) being movable at least in sections in the transport direction (TR);
outer guide elements (20) arranged on the transfer plate (15) and laterally bounding the transport section (17); and
inner guide elements (21) arranged on the transfer plate (15), the inner guide elements (21) being adjustable by means of at least one adjusting mechanism arranged at least partially below the transfer plate (15), wherein the transport section (17) is being divided into a plurality of segments in the transport direction, wherein two inner guide elements (21) are being assigned to each segment, **characterized in that** the transfer plate (15) has apertures which are formed at least in sections orthogonally to the transport direction (TR) of the articles (2), in particular elongated holes (40) or slots (80) formed orthogonally to the transport direction (TR) of the articles (2), **in that** at least parts of the adjusting mechanism are movably guided within the apertures, in particular wherein at least parts of the at least one adjusting mechanism are being movably guided within the elongated holes (40) or slots (80), and **in that** the at least one adjusting mechanism of the two inner guide elements (21) of a segment is coupled in such a way that the two inner guide elements (21) of a segment can be adjusted together.

2. The transport section according to claim 1, wherein said at least one adjusting mechanism comprises first magnetic means (42) on said inner guide elements (21) and wherein said adjusting mechanism comprises second magnetic means (43) guided inside said apertures.

3. The transport section according to claim 2, wherein a non-magnetic cover (41) is arranged on the transfer plate (15), which is covering the apertures.

4. The transport section according to claim 1, wherein two first inner guide elements (22) are arranged in a first segment in an inlet area of the transport section (17), which two first inner guide elements (22) are arranged at an angle to the transport direction (TR), wherein the angle of the two first inner guide elements (22) is adjustable relative to the transport direction (TR).

5. The transport section according to claim 4, wherein two second inner guide elements (23) are arranged parallel to the transport direction (TR) at least in a subsequent segment, wherein the two second inner guide elements (23) are designed to be movable perpendicular to the transport direction (TR).

6. The transport section according to claim 5, wherein a respective first inner guide element (22) is pivotally arranged on a second inner guide element (23) by means of a pivot joint (25).

7. The transport section according to claim 1, wherein a spreading wedge (70) is arranged in a first segment in an inlet area of the transport section (17) and wherein two adjustable inner guide elements (21) are arranged at least in a subsequent segment, wherein the inner guide elements (21) are adjustable parallel to the transport direction (TR) and/or at an angle to the transport direction (TR).

8. A method for setting and/or adjusting at least one transport path within a transport section (17) according to one of the claims 1 to 7, which transport section (17) is designed for feeding article assemblies (5) in a transport direction (TR) to a packaging module (18) for the article assemblies (5), wherein the articles (2) of the article assemblies (5) are slidingly moved within the transport section (17) in the transport direction (TR) on a transfer plate (15), wherein inner guide elements (21) arranged on the transfer plate (15) for adjusting the at least one transport path are adjusted according to the desired article assemblies (5) by at least one adjusting mechanism, which adjusting mechanism is arranged at least partially below the transfer plate (15).

9. A packaging system (1) for article assemblies (5) comprising a grouping unit for assembling the articles (2) and a packaging module (18), wherein the grouping unit comprises a transport section (17) according to one of the claims 1 to 7 for feeding article assemblies (5) in a transport direction (TR) to the packaging module (18).

## Revendications

1. Section de transport (17) destinée à amener des ensembles d'articles (5) dans une direction de transport (TR) à un module d'emballage (18) pour les ensembles d'articles (5), comprenant
une plaque de transfert par poussée (15) sur laquelle les articles (2) des ensembles d'articles (5) sont déplaçables de manière coulissante dans la direction de transport (TR);
des moyens de poussée (16) disposés au-dessus de la plaque de transfert par poussée (15) et destinés à déplacer les articles (2) sur la plaque de transfert par poussée (15), les moyens de poussée (16) étant déplaçables, au moins par zones, dans la direction de transport (TR);
des éléments de guidage extérieurs (20) disposés sur la plaque de transfert par poussée (15) et délimitant latéralement la section de transport (17); et
des éléments de guidage intérieurs (21) disposés sur la plaque de transfert par poussée (15),
dans laquelle les éléments de guidage intérieurs (21) peuvent être réglés par au moins un mécanisme de réglage disposé au moins en partie au-dessous de la plaque de transfert par poussée (15), dans laquelle la section de transport (17) est divisée en plusieurs segments dans la direction de transport, à chaque segment étant associés deux éléments de guidage intérieurs (21), **caractérisée par le fait que** la plaque de transfert par poussée (15) présente, au moins par zones, des percées réalisées orthogonalement à la direction de transport (TR) des articles (2), en particulier des trous oblongs (40) ou des fentes (80) réalisé(e)s orthogonalement à la direction de transport (TR) des articles (2), qu'au moins des parties du mécanisme de réglage sont guidées de manière mobile à l'intérieur des percées, en particulier dans laquelle au moins des parties dudit au moins un mécanisme de réglage sont guidées de manière mobile à l'intérieur des trous oblongs (40) ou des fentes (80), et que ledit au moins un mécanisme de réglage des deux éléments de guidage intérieurs (21) d'un segment est couplé de sorte que les deux éléments de guidage intérieurs (21) d'un segment sont réglables ensemble.

2. Section de transport selon la revendication 1, dans laquelle ledit au moins un mécanisme de réglage comprend de premiers moyens magnétiques (42) sur les éléments de guidage intérieurs (21) et dans laquelle le mécanisme de réglage comprend de deuxièmes moyens magnétiques (43) guidés à l'intérieur des percées.

3. Section de transport selon la revendication 2, dans laquelle un revêtement non magnétique (41) est disposé sur la plaque de transfert par poussée (15), qui recouvre les percées.

4. Section de transport selon la revendication 1, dans laquelle deux premiers éléments de guidage intérieurs (22) qui sont disposés à un angle par rapport à la direction de transport (TR) sont disposés dans un premier segment dans une zone d'entrée de la section de transport (17), l'angle des deux premiers éléments de guidage intérieurs (22) étant réglable par rapport à la direction de transport (TR).

5. Section de transport selon la revendication 4, dans laquelle deux deuxièmes éléments de guidage intérieurs (23) sont disposés parallèlement à la direction de transport (TR) au moins dans un segment disposé en aval, les deux deuxièmes éléments de guidage intérieurs (23) étant conçus de manière à être déplaçables perpendiculairement à la direction de transport (TR).

6. Section de transport selon la revendication 5, dans laquelle respectivement un premier élément de guidage intérieur (22) est disposé de manière pivotante, au moyen d'une articulation tournante (25), sur un deuxième élément de guidage intérieur (23).

7. Section de transport selon la revendication 1, dans laquelle une cale d'expansion (70) est disposée dans un premier segment dans une zone d'entrée de la section de transport (17), et dans laquelle deux éléments de guidage intérieurs réglables (21) sont disposés au moins dans un segment disposé en aval, dans laquelle les éléments de guidage intérieurs (21) peuvent être réglés parallèlement à la direction de transport (TR) et/ou à un angle par rapport à la direction de transport (TR).

8. Procédé d'ajustage et/ou de réglage d'au moins un chemin de transport à l'intérieur d'une section de transport (17) selon l'une quelconque des revendications 1 à 7, laquelle section de transport (17) est conçue pour amener des ensembles d'articles (5) dans une direction de transport (TR ) à un module d'emballage (18) pour les ensembles d'articles (5), dans lequel les articles (2) des ensembles d'articles (5) sont déplacés de manière coulissante à l'intérieur de la section de transport (17) dans la direction de transport (TR) sur une plaque de transfert par poussée (15), dans lequel, pour ajuster ledit au moins un chemin de transport, des éléments de guidage intérieurs (21) disposés sur la plaque de transfert par poussée (15) sont ajustés en fonction des ensembles d'articles (5) souhaités par au moins un mécanisme de réglage disposé au moins en partie au-dessous de la plaque de transfert par poussée (15).

9. Installation d'emballage (1) pour des ensembles d'articles (5), comprenant une unité de groupement pour réunir les articles (2) ainsi qu'un module d'emballage (18), dans laquelle ladite unité de groupement comprend une section de transport (17) selon l'une quelconque des revendications 1 à 7, pour amener des ensembles d'articles (5) dans une direction de transport (TR) au module d'emballage (18).
